# EUROPEAN PATENT APPLICATION

(11) **EP 4 461 767 A1**
(43) Date of publication of application: **13.11.2024**
(21) Application number: 24172477.2
(22) Date of filing: 25.04.2024
(51) Int. Cl.: C08K 5/01, C08L 23/16, C08L 91/00

(54) **EPDM COMPOSITION**

(30) Priority: 11.05.2023 JP 2023078600
(71) Applicant: NOK Corporation, Minato-ku Tokyo 105-8585 (JP)
(72) Inventor: OSAKA, Ryo, Tottori, 683-0362 (JP)
(74) Representative: Kraus & Lederer PartGmbB

(57) **Abstract**

An EPDM composition comprising 1 to 12 parts by weight of liquid polybutadiene and 1 to 12 parts by weight of a plant-derived component-containing terpene resin based on 100 parts by weight of a plant-derived component-containing ethylene-propylene-diene terpolymer. The EPDM composition is obtained by adding, to EPDM that has, at least in part, a plant-derived component with low environmental impact, liquid polybutadiene, which is compatible with EPDM and can improve roll processability by reducing the compound viscosity, and further using a specific amount of a plant-derived component-containing terpene resin for the biomass degree, which is inevitably reduced due to the addition of the liquid polybutadiene, whereby it has excellent effects that the biomass degree of EPDM to be obtained can be maintained while suppressing the occurrence of bagging during roll kneading; specifically, the rate of change in biomass degree is less than ±1.5% in comparison to a composition to which liquid polybutadiene and a plant-derived component-containing terpene resin are not added.

## Description

### TECHNICAL FIELD

The present invention relates to an EPDM composition. More particularly, the present invention relates to an EPDM composition that can be effectively used as, for example, a vulcanization molding material for sealing materials, anti-vibration rubber.

### BACKGROUND ART

Ethylene-propylene-diene terpolymer rubber (EPDM) has excellent heat resistance due to its polymer structure, and is widely used as a molding material for industrial parts.

Among these various parts, particularly gaskets, valves, and the like are required to have excellent compression set resistance characteristics; thus, peroxide crosslinking is used. Since peroxide crosslinking systems have a short crosslinking induction time and quick start-up during crosslinking, it is necessary to add a plasticizer to items that require fluidity, such as complex and thin shapes, in order to improve the molding defects thereof.

As such an EPDM composition, the present applicant has previous proposed, as an EPDM composition that satisfies molding processability and provides a crosslinked product with excellent compression set resistance characteristics, a sealing rubber composition comprising (A) 32 to 60 parts by weight of carbon black A having an average particle size of 60 to 100 nm, an iodine adsorption of 14 to 23 g/kg, and a DBP oil absorption of 100 ml/100 g or more, (B) 10 to 30 parts by weight of carbon black B having an average particle size of 40 to 50 nm, an iodine adsorption of 35 to 49 g/kg, and a DBP oil absorption of 100 to 160 ml/100 g, (C) 2 to 10 parts by weight of an ethylene-α-olefin copolymer, and (D) 0 to 16 parts by weight of silica, based on 100 parts by weight of an ethylene-propylene-diene-based copolymer rubber (Patent Document 1).

On the other hand, recently, towards the realization of a sustainable society, plant-derived raw materials, which capture and fix carbon dioxide during the production process, are superior to petroleum-based raw materials in that they can be recycled without changing the total amount of carbon dioxide in the atmosphere, and are non-depletable raw materials. For this reason, their active use has been considered extremely important.

From this point of view, the use of plant-derived raw materials is strongly desired for rubber compositions, particularly for EPDM compositions commonly used for sealing materials, anti-vibration rubber, and the like.

For rubber compositions using EPDM, in general, when processability during kneading with open rolls (hereinafter referred to as roll processability) is poor, in particular, the rubber wrapped around the rolls peels off from the surface; so-called bagging occurs. In order to suppress bagging, mineral oil-based plasticizers, which are compatible with EPDM, are generally added. However, if EPDM using, at least in part, a plant-derived component is used, the mineral oil-based plasticizer reduces the biomass degree of the rubber composition. For this reason, it is required to maintain the biomass degree while suppressing the occurrence of bagging.

### PRIOR ART DOCUMENT

### PATENT DOCUMENT

Patent Document 1 : JP-A-2023-30734

### OUTLINE OF THE INVENTION

### PROBLEM TO BE SOLVED BY THE INVENTION

An object of the present invention is to provide an EPDM composition using, at least in part, a plant-derived component that can maintain the biomass degree of EPDM to be obtained while suppressing the occurrence of bagging.

### MEANS FOR SOLVING THE PROBLEM

The above object of the present invention can be achieved by an EPDM composition comprising 1 to 12 parts by weight of liquid polybutadiene and 1 to 12 parts by weight of a plant-derived component-containing terpene resin based on 100 parts by weight of a plant-derived component-containing ethylene-propylene-diene terpolymer.

### EFFECT OF THE INVENTION

The EPDM composition according to the present invention is obtained by adding, to EPDM that has, at least in part, a plant-derived component with low environmental impact, liquid polybutadiene, which is compatible with EPDM and can improve roll processability by reducing the compound viscosity, and further using a specific amount of a plant-derived component-containing terpene resin for the biomass degree, which is inevitably reduced due to the addition of the liquid polybutadiene, whereby it has excellent effects that the biomass degree of EPDM to be obtained can be maintained while suppressing the occurrence of bagging during roll kneading; specifically, the rate of change in biomass degree is less than ±1.5% in comparison to a composition to which liquid polybutadiene and a plant-derived component-containing terpene resin are not added.

### EMBODIMENTS FOR CARRYING OUT THE INVENTION

The EPDM used is one obtained by copolymerizing ethylene, propylene and various non-conjugated diene components containing, at least in part, specifically 40 to 80 wt.% of a plant-derived component. Examples of the plant-derived component include ethylene purified from sugar cane. As such an EPDM, for example, a commercial product Keltan ECO 6950 (percentage of ethylene purified from sugar cane: 48 wt.%), 5470 (percentage of ethylene purified from sugar cane: 70 wt.%), or 8550 (percentage of ethylene purified from sugar cane: 55 wt.%), all of which are produced by Arlanxeo, can be used as it is. Examples of the non-conjugated diene component include ethylidene norbornene(ENB), dicyclopentadiene(DCPD), 1,4-hexadiene(HD) , and the like

As the liquid polybutadiene, liquid polybutadiene having a 1,2-vinyl content of 25 wt.% or more, preferably 28 to 99 wt.%, is compounded. If a plasticizer of type other than these or a plasticizer having a 1,2-vinyl content of less than the above range is used, desired molding processability cannot be satisfied. In practice, commercial products, such as NISSO-PB series, produced by Nippon Soda Co., Ltd., and RICON series, produced by CRAY VALLEY, can be used as they are.

Liquid polybutadiene is compounded for use at a ratio of 1 to 12 parts by weight, preferably 2 to 10 parts by weight, based on 100 parts by weight of EPDM. If the amount of liquid polybutadiene used is greater than this range, sticking of the compound during kneading causes the deterioration of roll processability. In contrast, if the amount of liquid polybutadiene used is less than this range, the Mooney viscosity ML₁₊₄ (125°C) is higher than 65, and bagging occurs.

The plant-derived component-containing terpene resin used is a terpene resin having, at least in part, a plant-derived component, for example, a terpene resin obtained by further purifying turpentine or orange oil purified from plant, such as pine or orange peel, and the like. As such a plant-derived component-containing terpene resin, for example, a commercial product YS Resin series produced by Yasuhara Chemical Co., Ltd., such as YS Resin 105 (plant-derived component: 70 wt.%), is compounded for use at a ratio of 1 to 12 parts by weight, preferably 2 to 10 parts by weight, based on 100 parts by weight of EPDM. If the plant-derived component-containing terpene resin is used at a ratio greater than this range, sticking of the compound during kneading causes the deterioration of roll processability. In contrast, if the plant-derived component-containing terpene resin is used at a ratio less than this range, the Mooney viscosity ML₁₊₄ (125°C) is higher than 65, and bagging occurs, which may make it difficult to suppress the reduction in the biomass degree.

The use of a plant-derived component-containing terpene resin makes it possible to supplement the biomass degree, which is inevitably reduced due to the addition of liquid polybutadiene, and to maintain the biomass degree of EPDM to be obtained while suppressing the occurrence of bagging during roll kneading.

The EPDM composition comprising each of the above essential components is compounded with an organic peroxide as a crosslinking agent. Examples of the organic peroxide include tert-butyl peroxide, dicumyl peroxide, tert-butyl cumyl peroxide, 1,1-di(tert-butylperoxy)-3,3,5-trimethylcyclohexane, 2,5-dimethyl-2,5-di(tert-butylperoxy)hexane, 2,5-dimethyl-2,5-di(tert-butylperoxy)hexyne-3, 1,3-di(tert-butylperoxyisopropyl)benzene, 2,5-dimethyl-2,5-di(benzoylperoxy)hexane, tert-butyl peroxybenzoate, tert-butylperoxy isopropylcarbonate, n-butyl-4,4-di(tert-butylperoxy)valerate, and the like.

The organic peroxide is used in a proportion of 1 to 8 parts by weight, preferably 2 to 7 parts by weight, based on 100 parts by weight of the EPDM. If the proportion is less than this range, sufficient crosslinking density is not obtained, and heat resistance and compression set resistance characteristics are inferior. In contrast, if the proportion is greater than this range, a crosslinking-molded product cannot be obtained due to foaming.

In addition to the above components, compounding various agents generally used in the rubber industry are suitably added to the composition, within a range that does not impair the properties. Examples of the compounding agent include fillers or reinforcing agents, such as carbon black, silica; acid acceptors, such as oxide or hydroxide of a divalent metal (e.g. zinc oxide, magnesium oxide, etc.), hydrotalcite; plasticizers other than liquid polybutadiene; antiaging agents; and the like.

The preparation of the composition is carried out by kneading materials using a closed type kneading machine. The crosslinking thereof is carried out by press vulcanization performed at about 150 to 220°C for about 1 to 20 minutes and oven vulcanization (secondary vulcanization) optionally performed at about 120 to 200°C for about0. 1 to 20 hours.

### EXAMPLES

The following describes the present invention with reference to Examples.

### Example 1

| | |
|---|---|
| Plant-derived component-containing EPDM (Keltan ECO 6950, produced by ARLANXEO) | 100 parts by weight |
| Carbon black (Seast S, produced by Tokai Carbon Co., Ltd. | 55 parts by weight |
| Liquid polybutadiene (B-3000, produced by Nippon Soda Co., Ltd.) | 2 parts by weight |
| Plant-derived component-containing terpene resin (YS resin 105) | 5 parts by weight |
| Zinc oxide (Zinc oxide No. 1, produced by Sakai Chemical Industry Co., Ltd.) | 4 parts by weight |
| Organic Peroxide (Percumyl D, produced by NOF Corporation) | 3.5 parts by weight |

Each of the above components was kneaded with a kneader and an open roll, and the kneaded product was crosslinked at 180°C at a crosslinking rate of t90 × 1.5 sec, followed by post curing at 150°C for 15 hours, thereby obtaining a test piece with a thickness of 2 mm.

### Example 2

In Example 1, the amount of liquid polybutadiene was changed to 5 parts by weight for use, and the amount of terpene resin was changed to 2 parts by weight for use, respectively.

### Example 3

In Example 1, the amount of liquid polybutadiene was changed to 5 parts by weight for use.

### Example 4

In Example 1, the amount of liquid polybutadiene was changed to 5 parts by weight for use, and the amount of terpene resin was changed to 10 parts by weight for use, respectively.

### Example 5

In Example 1, the amount of liquid polybutadiene was changed to 10 parts by weight for use.

### Example 6

In Example 1, the amount of liquid polybutadiene was changed to 10 parts by weight for use, and the amount of terpene resin was changed to 10 parts by weight for use, respectively.

### Comparative Example 1

In Example 1, the liquid polybutadiene and terpene resin were not used.

### Comparative Example 2

In Comparative Example 1, the same amount (100 parts by weight) of EPDM that did not contain a plant-derived component (Keltan 6950, produced by Arlanxeo) was used as the EPDM.

### Comparative Example 3

In Comparative Example 1, 10 parts by weight of the plasticizer (PW-380, produced by Idemitsu Kosan Co., Ltd.) was further used.

### Comparative Example 4

In Comparative Example 2, 10 parts by weight of the plasticizer (PW-380, produced by Idemitsu Kosan Co., Ltd.) was further used.

### Comparative Example 5

In Example 1, the terpene resin was not used.

### Comparative Example 6

In Example 5, the terpene resin was not used.

### Comparative Example 7

In Example 1, the liquid polybutadiene was not used.

### Comparative Example 8

In Example 4, the liquid polybutadiene was not used.

### Comparative Example 9

In Example 1, the amount of liquid polybutadiene was changed to 15 parts by weight.

### Comparative Example 10

In Example 2, the amount of terpene resin was changed to 20 parts by weight.

The kneaded products of the above Examples and Comparative Examples or the obtained test pieces were evaluated, measured and calculated for roll processability, Mooney viscosity ML₁₊₄, biomass degree and normal state physical properties.
Roll processability: Using 10-inch open rolls, kneading was performed with a gap of 4 mm under the speed conditions of 14 rpm for the front roll and 17 rpm for the rear roll, and evaluation was performed according to the following criteria.
   ○: Kneading with the rolls was possible without problems.
   ×: Kneading was difficult due to bagging.
   *: Kneading was difficult due to the compound sticking to the rolls.
Mooney viscosity ML₁₊₄: according to JIS K6300 corresponding to ISO 289 (125°C)
Biomass degree: the content ratio (wt.%) of the plant-derived component calculated by the following formula: {weight (g) of plant-derived component in EPDM composition /weight (g) of EPDM composition} × 100
Normal state physical properties: according to JIS K6253 corresponding to ISO 7619-1 and JIS K6251 corresponding to ISO 37

Following Tables 1 and 2 show the results obtained.

**Table 1**

| Measurement•evaluation item | | Ex. 1 | Ex. 2 | Ex. 3 | Ex. 4 | Ex. 5 | Ex. 6 |
|---|---|---|---|---|---|---|---|
| Roll processability | | ○ | ○ | ○ | ○ | ○ | ○ |
| Mooney viscosity ML₁₊₄ | | 63 | 56 | 55 | 55 | 45 | 43 |
| Biomass degree | (wt.%) | 30.4 | 29.1 | 29.8 | 31.0 | 29.2 | 30.1 |
| Hardness (JIS A) | | 69 | 71 | 70 | 64 | 71 | 66 |
| Tensile strength Ts | (MPa) | 17.0 | 16.7 | 16.5 | 15.7 | 15.4 | 17.0 |
| Elongation at break Eb | (%) | 210 | 170 | 200 | 250 | 170 | 200 |

**Table 2**

| Measurement•evaluation item | | Comp. Ex. 1 | Comp. Ex. 2 | Comp. Ex. 3 | Comp. Ex. 4 | Comp. Ex. 5 | Comp. Ex. 6 | Comp. Ex. 7 | Comp. Ex. 8 | Comp. Ex. 9 | Comp. Ex. 10 |
|---|---|---|---|---|---|---|---|---|---|---|---|
| Roll processability | | × | × | ○ | ○ | × | ○ | × | × | * | * |
| Mooney viscosity ML₁₊₄ | | 78 | 78 | 57 | 57 | 66 | 50 | 69 | 67 | 32 | 48 |
| Biomass degree | (wt.%) | 29.5 | 0 | 27.8 | 0 | 29.2 | 27.8 | 30.7 | 31.9 | 28.2 | 33.1 |
| Hardness (JIS A) | | 70 | 70 | 67 | 66 | 72 | 76 | 68 | 64 | 74 | 60 |
| Tensile strength Ts | (MPa) | 12.8 | 11.5 | 16.9 | 17.0 | 12.8 | 14.5 | 15.9 | 15.2 | 15.7 | 17.3 |
| Elongation at break Eb | (%) | 140 | 140 | 240 | 220 | 140 | 100 | 210 | 260 | 100 | 360 |

The above results reveal the following.
(1) The EPDM composition obtained in each Example has excellent processability during kneading and maintains the biomass degree of EPDM to be obtained while suppressing the occurrence of bagging.
(2) If liquid polybutadiene and/or a terpene resin are not used, the Mooney viscosity ML₁₊₄ (125°C) is higher than 65, and bagging occurs (Comparative Examples 1, 2, 5, 7, and 8).
(3) Even if liquid polybutadiene and a terpene resin are not used, the Mooney viscosity ML₁₊₄ (125°C) can be adjusted to 65 or less by adding a plasticizer, the occurrence of bagging can be suspended, and further excellent roll processability can be obtained; however, the reduction in the biomass degree cannot be avoided (Comparative Example 3).
(4) If a terpene resin is not used, the reduction in the biomass degree cannot be avoided (Comparative Example 6).
(5) Even when a plant-derived component-containing terpene resin is used, if liquid polybutadiene is not used, the Mooney viscosity ML₁₊₄ (125°C) is higher than 65, and bagging occurs (Comparative Examples 1, 2, 5, 7, and 8).
(6) Even when liquid polybutadiene or a plant-derived component-containing terpene resin is used, if it is used at a rate equal to or higher than the predetermined amount, sticking of the compound during kneading causes the deterioration of roll processability (Comparative Examples 9 and 10).

## Claims

1. An EPDM composition comprising 1 to 12 parts by weight of liquid polybutadiene and 1 to 12 parts by weight of a plant-derived component-containing terpene resin based on 100 parts by weight of a plant-derived component-containing ethylene-propylene-diene terpolymer.

2. The EPDM composition according to claim 1, wherein the plant-derived component is an ethylene purified from sugar cane.

3. The EPDM composition according to claim 1 or 2, wherein the 40 to 80 wt.% of a plant-derived component-containing ethylene is used as a copolymerization component.

4. The EPDM composition according to claim 1, wherein the liquid polybutadiene having a 1,2-vinyl content of 25 wt.% or more is used

5. The EPDM composition according to claim 1, wherein the plant-derived component-containing terpene resin is a terpene resin obtained by further purifying turpentine or orange oil purified from plant.

6. The EPDM composition according to claim 1, which has a rate of change in biomass degree of less than ±1.5% in comparison to a composition to which liquid polybutadiene and a plant-derived component-containing terpene resin are not added.

7. The EPDM composition according to claim 1, which Mooney viscosity ML₁₊₄ (125°C) is 65 or less.

8. A vulcanized molded product of the EPDM composition according to claim 1.

9. The vulcanized molded product according to claim 8, which is sealing materials or anti-vibration rubber.
